# EUROPEAN PATENT SPECIFICATION

(11) **EP 3 591 305 B1**
(45) Date of publication and mention of the grant of the patent: **14.02.2024**
(21) Application number: 18760446.7
(22) Date of filing: 22.02.2018
(51) Int. Cl.: F24F 13/22, F24F 1/00, F24F 11/30, F24F 11/62, F24F 11/70, F24F 11/86, F24F 11/77, F24F 1/0059, F24F 140/20

(54) **MOLD PREVENTION METHOD FOR AIR CONDITIONER**
SCHIMMELVORBEUGUNGSVERFAHREN FÜR KLIMAANLAGE
PROCÉDÉ ANTI-MOISISSURE POUR CLIMATISEUR

(30) Priority: 28.02.2017 JP 2017036408
(43) Date of publication of application: 08.01.2020
(73) Proprietor: Fujitsu General Limited, Kanagawa 213-8502 (JP)
(72) Inventor: OKUNO Hiroki, Kawasaki-shi, Kanagawa 213-8502 (JP)
(74) Representative: Cabinet Beau de Loménie
(86) International application number: PCT/JP2018/006438
(87) International publication number: WO 2018/159442

(56) References cited:
- WO-A1-2015/182486
- CN-A- 104 913 429
- JP-A- H06 129 656
- JP-A- 2000 213 795
- JP-A- 2006 125 801
- JP-A- 2006 125 801
- JP-A- 2006 138 545
- JP-A- 2006 138 545
- JP-A- 2010 071 500
- JP-U- H0 590 213
- JP-U- H0 590 213

## Description

### Technical Field

The present invention relates to an antifungal method for an air conditioner.

### Background Art

PTLs 1 and 2 disclose an air conditioner. For example, in Japan, dew condensation water is generated on a surface of an indoor heat exchanger during a cooling operation in summer. Dew condensation water causes the growth of fungus. The fungus causes unpleasant odors. In an indoor unit of the air conditioner, the control of the fungus is required. PTL 3 shows an antifungal method according to the preamble of claim 1.

### Citation Lists

### Patent Literatures

PTL 1: JP-A-10-62000
PTL 2: JP-A-2016-65687
PTL 3: JP-A-2006-125801 A

### Summary of Invention

### Technical Problem

The air conditioner described in PTLs 1 and 2 heats the heat exchanger in order to dry an inside of a main body of the indoor unit after the cooling operation, in order to suppress the growth of bacteria and fungus. However, although such heating for drying can suppress the growth of the bacteria and the fungus, it does not lead to so-called sterilization, which kills the bacteria and the fungus and reduces the number thereof. In a state where the heat exchanger is dry, it is not possible to kill the bacteria and the fungus and reduce the number thereof unless the temperature is 150 degrees Celsius or higher. Generally, the temperature of the heat exchanger during the heating operation for drying the heat exchanger of the air conditioner is set to substantially 40 degrees Celsius. When the cooling operation is performed again, there is a potential for the bacteria and the fungus whose growth has been suppressed to propagate again.

An object of the present invention is to provide an antifungal method for an air conditioner which realizes so-called sterilization, which kills bacteria and fungus and reduces the number thereof by heating a heat exchanger.

### Solution to Problem

The present invention provides the antifungal method (fungus controlling method) for an air conditioner of claim 1 including: a step of wetting a surface of a heat exchanger with dew condensation water; and a step of heating the heat exchanger based on condensation of a refrigerant to heat the heat exchanger where the temperature of the heat exchanger is maintained in a range equal to or higher than 45 degrees Celsius and equal to or lower than 60 degrees Celsius, thereby not evaporating the dew condensation water.

Bacteria and fungus are heated with the dew condensation water. It is possible to kill the bacteria and reduce the number thereof by applying heat to the bacteria and the fungus in a high humidity state at a temperature lower than a temperature in a dry state (hereinafter referred to as "wet-heat sterilization"). Since the number of bacteria and fungi can be less than that in a state where growth thereof is simply suppressed, the generation of unpleasant odor is prevented.

A temperature of the heat exchanger during heating is set to 45 degrees Celsius or higher. When the temperature is set to 45 degrees Celsius or higher, the dew condensation water is heated to 45 degrees Celsius or higher, and sterilization of the bacteria and the fungus is realized.

In the antifungal method for an air conditioner, the refrigerant may be evaporated in the heat exchanger when the surface of the heat exchanger is wetted. The temperature of the heat exchanger is lowered, and dew condensation water is efficiently generated on the surface of the heat exchanger. Sufficient wetting can be ensured on the surface of the heat exchanger.

In the antifungal method for an air conditioner, when the heat exchanger is heated, a connecting body connecting the front body and the rear body of the heat exchanger to each other is provided, heat is transferred from the heat exchanger, and the condensation of the refrigerant may be executed until the temperature of the connecting body reaches a set temperature. Thus, in the heat exchanger, the connecting body connecting the front body and the rear body to each other is heated to a sufficient set temperature, so that the bacteria and the fungus are sufficiently heated together with the dew condensation water generated on the surface of the connecting body, and the wet-heat sterilization is executed.

The connecting body connecting the heat exchangers shields wind at an air gap between the front body and the rear body of the heat exchanger. The connecting body receives heat transfer of the heat exchanger of which the temperature is lowered by the evaporation of the refrigerant, and dew condensation water is generated on the surface. Since the connecting body shields the wind, the dew condensation water hardly evaporates in the vicinity of the connecting body. It was difficult to dry the vicinity of the connecting body. It is possible to kill bacteria and fungus, and reduce the number thereof in the vicinity of the connecting body where air does not easily circulate by executing wet-heat sterilization.

In the antifungal method for an air conditioner, which includes a drain pan connected to the heat exchanger for receiving the dew condensation water falling from the heat exchanger when the heat exchanger is heated, transferring heat from the heat exchanger to the dew condensation water accumulated in the drain pan, and executing the condensation until the dew condensation water accumulated in the drain pan reaches a set temperature. Thus, since the dew condensation water accumulated in the drain pan is heated to a sufficient set temperature, the bacteria and the fungus are sufficiently heated together with the dew condensation water accumulated in the drain pan, and the wet-heat sterilization is executed.

An overload condition of the compressor set at a time of condensation may be alleviated compared to an overload condition of the compressor set at a time of heating operation. Since the overload condition of the compressor is alleviated at the time of condensation, the heat exchanger can be heated to a higher temperature than that at the time of the heating operation. The wet-heat sterilization of the bacteria and the fungus is realized.

The antifungal method for an air conditioner may stop rotation of a blower fan at the time of heating of the heat exchanger. The evaporation of the dew condensation water can be reliably suppressed.

Heat is reliably transferred from the heat exchanger to the dew condensation water accumulated in the drain pan through the heat transfer member. Therefore, when the heat exchanger is heated based on the condensation of the refrigerant, the dew condensation water accumulated in the drain pan is reliably heated to the set temperature. The dew condensation water accumulated in the drain pan can be sufficiently heated. The bacteria and the fungus are sterilized in heated dew condensation water. Thus, the bacteria and the fungus can be killed and the number thereof can be reduced.

### Advantageous Effects of Invention

As described above, according to the disclosed method, an antifungal method for an air conditioner is provided which realizes sterilization more effectively than the related art.

### Brief Description of Drawings

[FIG. 1] FIG. 1 is a conceptual view schematically illustrating a configuration of an air conditioner operable according to the present invention's method.
[FIG. 2] FIG. 2 is a perspective view schematically illustrating an appearance of an indoor unit.
[FIG. 3] FIG. 3 is a perspective view schematically illustrating a configuration of a main body of the indoor unit.
[FIG. 4] FIG. 4 is an exploded perspective view schematically illustrating a structure of the indoor unit.
[FIG. 5] FIG. 5 is an enlarged vertical sectional view of the main body of the indoor unit.
[FIG. 6] FIG. 6 is a block diagram schematically illustrating a configuration of a control unit.
[FIG. 7] FIG. 7 is a flowchart schematically illustrating an antifungal processing operation.

### Reference Signs List

11: air conditioner, 14: heat exchanger (indoor heat exchanger), 14a: front body, 14b: rear body, 15: compressor, 24: blower fan (of the indoor unit), 73: connecting body, 75a: drain pan (first drain pan), 75b: drain pan (second drain pan), 76: heat transfer member (third heat transfer member), 77: heat transfer member (fourth heat transfer member)

### Description of an air conditioner and its operation

### (1) Configuration of Air Conditioner

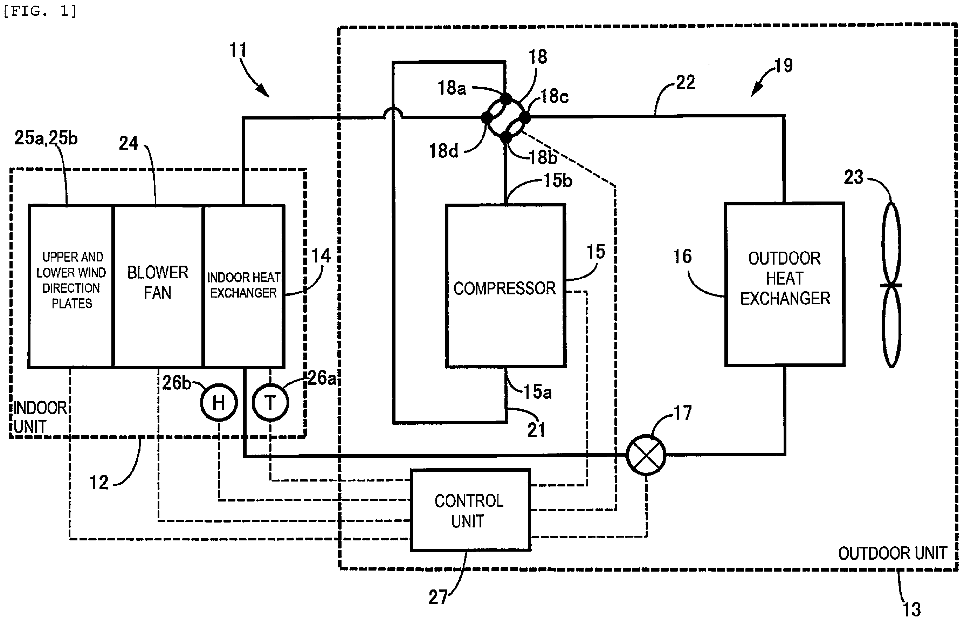

FIG. 1 schematically illustrates a configuration of an air conditioner 11. The air conditioner 11 includes an indoor unit 12 and an outdoor unit 13. The indoor unit 12 is installed, for example, in an indoor space in a building. In addition, the indoor unit 12 may be installed in a space corresponding to the indoor space. An indoor heat exchanger 14 is incorporated in the indoor unit 12. A compressor 15, an outdoor heat exchanger 16, an expansion valve 17, and a four-way valve 18 are incorporated in the outdoor unit 13. The indoor heat exchanger 14, the compressor 15, the outdoor heat exchanger 16, the expansion valve 17, and the four-way valve 18 form a refrigeration circuit 19. The outdoor unit 13 may be installed outdoors where heat exchange with outdoor air is possible.

The refrigeration circuit 19 includes a first circulation path 21. The first circulation path 21 connects a first port 18a and a second port 18b of the four-way valve 18 to each other. The compressor 15 is provided in the first circulation path 21. An inlet pipe 15a of the compressor 15 is connected to the first port 18a of the four-way valve 18 via refrigerant piping. A gas refrigerant is supplied from the first port 18a to the inlet pipe 15a of the compressor 15. The compressor 15 compresses the low pressure gas refrigerant to a predetermined pressure. A discharge pipe 15b of the compressor 15 is connected to the second port 18b of the four-way valve 18 via the refrigerant piping. The gas refrigerant is supplied from the discharge pipe 15b of the compressor 15 to the second port 18b of the four-way valve 18. The refrigerant piping may be, for example, a copper pipe.

The refrigeration circuit 19 further includes a second circulation path 22. The second circulation path 22 connects a third port 18c and a fourth port 18d of the four-way valve 18 to each other. The outdoor heat exchanger 16, the expansion valve 17, and the indoor heat exchanger 14 are incorporated in the second circulation path 22 in order from a third port 18c side. The outdoor heat exchanger 16 exchanges heat energy between a passing refrigerant and ambient air. The indoor heat exchanger 14 exchanges heat energy between the passing refrigerant and the ambient air.

A blower fan 23 is incorporated in the outdoor unit 13. The blower fan 23 ventilates the outdoor heat exchanger 16. The blower fan 23 generates an airflow according to, for example, a rotation of an impeller. The airflow passes through the outdoor heat exchanger 16 by an operation of the blower fan 23. The outdoor air passes through the outdoor heat exchanger 16 and exchanges heat with the refrigerant. The heat-exchanged cold airflow or warm airflow is blown out of the outdoor unit 13. A flow rate of a passing airflow is adjusted in accordance with a rotational speed of an impeller.

A blower fan 24 is incorporated in the indoor unit 12. The blower fan 24 ventilates the indoor heat exchanger 14. The blower fan 24 generates an airflow according to the rotation of the impeller. Indoor air is blown into the indoor unit 12 by the operation of the blower fan 24. The indoor air passes through the indoor heat exchanger 14 and exchanges heat with the refrigerant. The heat-exchanged cold airflow or warm airflow is blown out of the indoor unit 12. A flow rate of a passing airflow is adjusted in accordance with a rotational speed of an impeller.

The indoor unit 12 includes upper and lower wind direction plates 25a and 25b. The upper and lower wind direction plates 25a and 25b define the direction of the airflow blown out from the indoor unit 12. Details of structures of the upper and lower wind direction plates 25a and 25b will be described later.

In a case where a cooling operation is performed by the refrigeration circuit 19, the four-way valve 18 connects the second port 18b and the third port 18c to each other, and connects the first port 18a and the fourth port 18d to each other. Therefore, the high temperature and high pressure refrigerant is supplied from the discharge pipe 15b of the compressor 15 to the outdoor heat exchanger 16. The refrigerant flows through the outdoor heat exchanger 16, the expansion valve 17, and the indoor heat exchanger 14 in order. The outdoor heat exchanger 16 radiates heat from the refrigerant to the outside air. The refrigerant is depressurized to a low pressure by the expansion valve 17. The depressurized refrigerant absorbs heat from the ambient air in the indoor heat exchanger 14. Cold air is generated. The cold air is blown out into the indoor space by the operation of the blower fan 24.

In a case where the heating operation is performed by the refrigeration circuit 19, the four-way valve 18 connects the second port 18b and the fourth port 18d to each other, and connects the first port 18a and the third port 18c to each other. The high temperature and high pressure refrigerant is supplied from the compressor 15 to the indoor heat exchanger 14. The refrigerant flows through the indoor heat exchanger 14, the expansion valve 17, and the outdoor heat exchanger 16 in order. The indoor heat exchanger 14 radiates heat from the refrigerant to the ambient air. Warm air is generated. The warm air is blown out into the indoor space by the operation of the blower fan 24. The refrigerant is depressurized to a low pressure by the expansion valve 17. The depressurized refrigerant absorbs heat from the ambient air in the outdoor heat exchanger 16. Thereafter, the refrigerant returns to the compressor 15.

The air conditioner 11 includes a temperature sensor 26a and a humidity sensor 26b. The temperature sensor 26a is connected to the indoor heat exchanger 14. The temperature sensor 26a measures the temperature of the indoor heat exchanger 14. The temperature sensor 26a outputs a temperature signal including temperature information of the measured temperature. The humidity sensor 26b is installed in the indoor unit 12. The humidity sensor 26b measures a relative humidity in the indoor unit 12. The humidity sensor 26b outputs a humidity signal including humidity information of the measured humidity.

The air conditioner 11 includes a control unit 27. The control unit 27 is formed, for example, on a control board (not illustrated) incorporated in the outdoor unit 13. The control unit 27 is electrically connected to the four-way valve 18, the expansion valve 17, and the compressor 15 in the outdoor unit 13 through individual signal lines. Similarly, the control unit 27 is electrically connected to a drive motor of the blower fan 24, a drive source of the upper and lower wind direction plates 25a and 25b, the temperature sensor 26a, and the humidity sensor 26b in the indoor unit 12 through individual signal lines. The control unit 27 controls operations of the four-way valve 18, the expansion valve 17, and the compressor 15 in outdoor unit 13, and the blower fan 24 in the indoor unit 12 based on the temperature signal from temperature sensor 26a and the humidity signal from humidity sensor 26b. As a result of such control, as described later, the cooling operation, the heating operation, and an antifungal processing operation of the air conditioner 11 are realized. The control unit 27 controls an operation of the blower fan 24 and operations of the upper and lower wind direction plates 25a and 25b during the cooling operation and the heating operation based on an operation signal input from a remote controller to the indoor unit 12 to control flow rates and wind directions of cold air and warm air.

### (2) Configuration of Indoor Unit

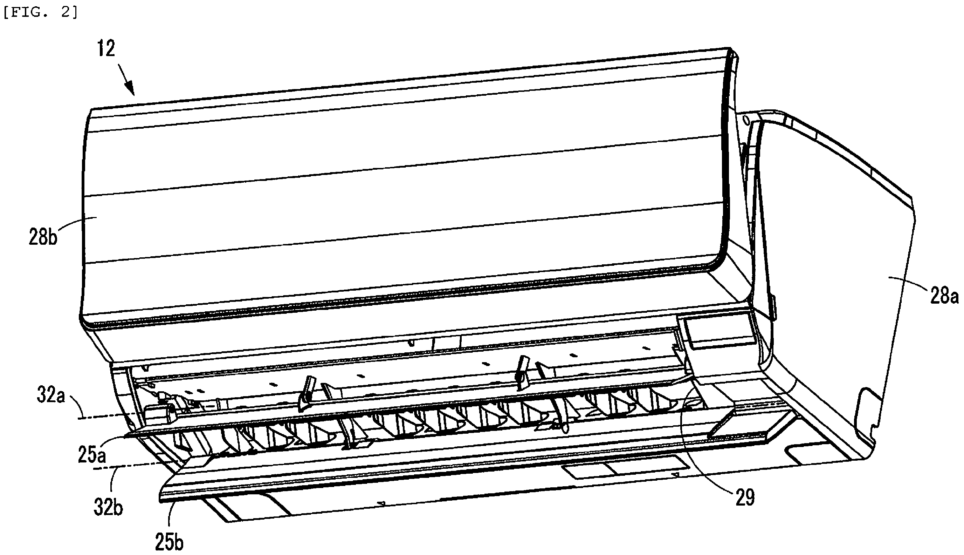

FIG. 2 schematically illustrates an appearance of the indoor unit 12 shown in Fig. 1. An outer panel 28b covers a main body (housing) 28a of the indoor unit 12. A blowing port 29 is formed on a lower face of the main body 28a. The blowing port 29 opens into the room. The main body 28a can be fixed to, for example, a wall surface in the room. The cold air or the warm air is generated in the indoor heat exchanger 14, and the airflow of the cold air or the warm air is blown out from the blowing port 29.

A pair of upper and lower wind direction plates 25a and 25b is disposed on the front and rear of the blowing port 29. The upper and lower wind direction plates 25a and 25b can rotate around horizontal axis lines 32a and 32b respectively parallel to a longitudinal direction of the main body. The upper and lower wind direction plates 25a and 25b open and close the blowing port 29 according to the rotation. The direction of the blown airflow can be changed according to angles of the upper and lower wind direction plates 25a and 25b.

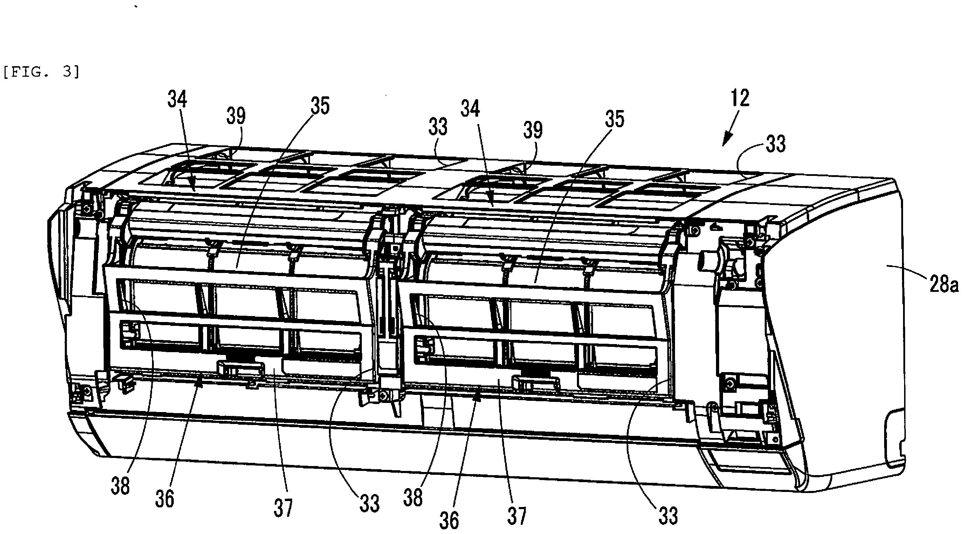

As illustrated in FIG. 3, a suction port 33 is formed in the main body 28a. The suction port 33 opens on the front and the top of the main body 28a. The indoor air is taken from the suction port 33 into the main body 28a and supplied toward the indoor heat exchanger 14.

An air filter assembly 34 is disposed in the suction port 33 in a direction parallel to the horizontal axis lines 32a and 32b. The air filter assembly 34 includes an air filter 35 and a dust box 36. The air filter 35 is held by the dust box 36. The dust box 36 is detachably attached to the main body 28a. When the dust box 36 is set to the main body 28a, the air filter 35 is disposed over an entire surface of the suction port 33.

The dust box 36 is formed with a front filter rail 38. A rear filter rail 39 is formed on the main body 28a corresponding to an extension line of the front filter rail 38. The filter rails 38 and 39 extend along a vertical plane perpendicular to the horizontal axis lines 32a and 32b. Left and right both ends of the air filter 35 are slidably held by the filter rails 38 and 39. The air filter 35 is driven by a second driven gear 52 described later, and moves along the filter rails 38 and 39.

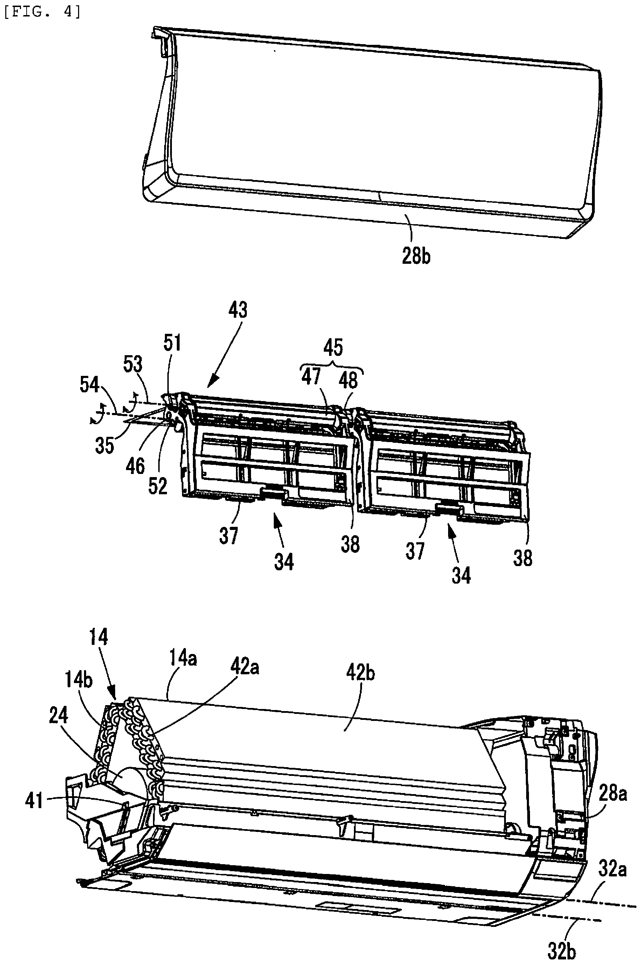

As illustrated in FIG. 4, the blower fan 24 is rotatably supported by the main body 28a. For example, a cross flow fan is used as the blower fan 24. The blower fan 24 rotates around a rotation shaft 41 parallel to the horizontal axis lines 32a and 32b. The rotation shaft 41 of the blower fan 24 extends in the horizontal direction when the main body 28a is installed. The blower fan 24 is disposed parallel to the blowing port 29. A driving force around the rotation shaft 41 is transmitted from a drive source (not illustrated) to the blower fan 24. The drive source is supported by the main body 28a. The airflow passes through the indoor heat exchanger 14 according to the rotation of the blower fan 24. As a result, the airflow of the cold air or the warm air is generated. The airflow of the cold air or the warm air is blown out from the blowing port 29.

The indoor heat exchanger 14 includes a front body 14a and a rear body 14b. The front body 14a faces the blower fan 24 from the front side of the blower fan 24. The rear body 14b faces the blower fan 24 from the rear side of the blower fan 24. The front body 14a and the rear body 14b are connected to each other at the upper end as described later. The front body 14a and the rear body 14b have refrigerant pipes 42a. That is, the refrigerant pipe 42a extends parallel to the horizontal axis lines 32a and 32b, is folded back at the left and right ends of the main body 28a in a front view, extends again parallel to the horizontal axis lines 32a and 32b, and is folded again at the left and right ends of the main body 28a in a front view, and these are repeated. The refrigerant pipe 42a constitutes a part of the second circulation path 22. A plurality of radiation fins 42b are coupled to the refrigerant pipe 42a. The radiation fins 42b extend parallel to each other while being orthogonal to the horizontal axis lines 32a and 32b. The refrigerant pipe 42a and the radiation fin 42b can be formed of, for example, a metal material such as copper or aluminum. Heat exchange is realized between the refrigerant and the air through the refrigerant pipe 42a and the radiation fin 42b.

As illustrated in FIG. 4, the air filter assembly 34 includes a filter cleaning unit 43. The dust box 36 takes one configuration element of the filter cleaning unit 43. The dust box 36 includes an upper dust box 45 and a lower dust box 46. The upper dust box 45 is disposed on the front side of the air filter 35. The upper dust box 45 has a cover 47. The cover 47 opens and closes a storage space 49 of a box main body 48. The lower dust box 46 is disposed on the rear side of the air filter 35. The upper dust box 45 and the lower dust box 46 sandwich the air filter 35. When the air filter 35 is cleaned, dust on the front surface of the air filter 35 is generally collected in the box main body 48 of the upper dust box 45, and dust on the rear surface of the air filter 35 is collected in the lower dust box 46.

The filter cleaning unit 43 includes a first driven gear 51 and a second driven gear 52. The first driven gear 51 is supported by the upper dust box 45. The first driven gear 51 rotates around the horizontal axis 53. Teeth of the first driven gear 51 are partially exposed from the outer surface of the upper dust box 45. Similarly, the second driven gear 52 is supported by the lower dust box 46. The second driven gear 52 rotates around the horizontal axis 54. The second driven gear 52 drives the air filter 35 at both ends of the lower dust box 46. Teeth of the second driven gear 52 are partially exposed from the outer surface of the lower dust box 46. When the air filter assembly 34 is set in the main body 28a, the first driven gear 51 meshes with a first driving gear (not illustrated) mounted on the main body 28a, and similarly, the second driven gear 52 meshes with a second driving gear (not illustrated) mounted on the main body 28a. A drive source (not illustrated) such as an electric motor is connected to each driving gear individually. The first driven gear 51 and the second driven gear 52 individually rotate in accordance with the driving force supplied from each drive source.

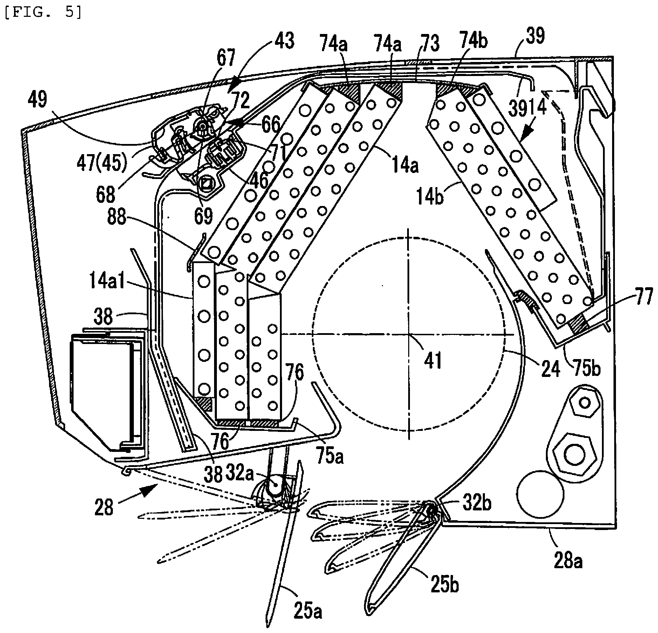

As illustrated in FIG. 5, the filter cleaning unit 43 includes a cleaning brush 66. The cleaning brush 66 is housed in the upper dust box 45. The cleaning brush 66 includes a brush pedestal 67. The brush pedestal 67 can be rotated around the horizontal axis 68 by the driving force from the first driven gear 51. The brush bristles 69 are disposed on a cylindrical surface of the brush pedestal 67 over a predetermined central angle range. A flocking range of the brush bristles 69 has a spread across the air filter 35 in the axial direction of the brush pedestal 67. The cleaning brush 66 brings the brush bristles 69 come into contact with the air filter 35 at a predetermined rotational position, and separates the brush bristles 69 from the air filter 35 at other than the rotational position. When the air filter 35 moves in a direction along a vertical plane perpendicular to the horizontal axis lines 32a and 32b in a state where the brush bristles 69 come into contact with the air filter 35, dust attached to the front surface of the air filter 35 can be entangled in the brush bristles 69.

The filter cleaning unit 43 includes a brush receiver 71. The brush receiver 71 is housed in the lower dust box 46. The brush receiver 71 has a receiving surface 72. The receiving surface 72 faces the cleaning brush 66. When the brush bristles 69 come into contact with the air filter 35, the receiving surface 72 sandwiches the air filter 35 with the brush bristles 69. In addition, brush bristles may be implanted on the receiving surface 72.

The indoor heat exchanger 14 includes a connecting body 73 that connects the front body 14a and the rear body 14b to each other. The connecting body 73 is coupled to the upper end of the front body 14a and the upper end of the rear body 14b. The connecting body 73 is formed of, for example, a metal material having a good thermal conductivity such as copper or aluminum. A first heat transfer member 74a for transferring heat from the front body 14a to the connecting body 73 is interposed between the front body 14a and the connecting body 73. The front body 14a and the connecting body 73 are in close contact with each other, and a high heat transfer coefficient is established between the front body 14a and the connecting body 73. For the first heat transfer member 74a, a heat conductive adhesive containing a large number of copper particles or silver particles as a resin filler, a solder material having a heat conductivity, and a welding material having a heat conductivity may be used. In this way, heat is efficiently transferred from the indoor heat exchanger 14 to the connecting body 73 from the front body 14a. Similarly, a second heat transfer member 74b for transferring heat from the rear body 14b to the connecting body 73 is pinched between the rear body 14b and the connecting body 73. The rear body 14b and the connecting body 73 are in close contact with each other, and a high heat transfer coefficient is established between the rear body 14b and the connecting body 73. The second heat transfer member 74b is formed of the same material as that of the first heat transfer member 74a. In this way, heat is efficiently transferred from the indoor heat exchanger 14 to the connecting body 73 from the rear body 14b.

The indoor heat exchanger 14 includes a lower body 14a1 below the front body 14a. A wind shielding body 88 is provided to shut the wind at the gap between the front body 14a and the lower body 14a1. The wind shielding body 88 is coupled to the lower end of the front body 14a and the upper end of the lower body 14a1. The wind shielding body 88 is formed of, for example, a metal material having a good thermal conductivity such as copper or aluminum. The front body 14a, the wind shielding body 88, the lower body 14a1, and the wind shielding body 88 are in contact with each other. Heat is transferred from the front body 14a and the lower body 14a1 to the wind shielding body 88. Thus, heat is transferred from the indoor heat exchanger 14 to the wind shielding body 88. In this way, heat is transferred to the condensed water accumulated downwind of the wind shielding body 88.

The indoor unit 12 of the air conditioner 11 includes a drain pan disposed below the indoor heat exchanger 14. The drain pan includes a first drain pan 75a disposed below the front body 14a and a second drain pan 75b disposed below the rear body 14b. The first drain pan 75a is supported by the main body 28a in the front of the blower fan 24. The second drain pan 75b is supported by the main body 28a in the rear of the blower fan 24. The heat of the heat exchanger may be transferred to a part of the first drain pan 75a and the second drain pan 75b by a heat conduction material. Dew condensation water generated on the surface of the front body 14a flows down to the first drain pan 75a by an action of a weight. The dew condensation water generated on the surface of the rear body 14b similarly flows down to the second drain pan 75b by an action of gravity. The first drain pan 75a and the second drain pan 75b are respectively gently inclined toward a lowermost discharge port (not illustrated). Piping connected to the outdoor unit 13 is connected to each discharge port.

A third heat transfer member 76 for transferring heat from the front body 14a to the dew condensation water accumulated in the first drain pan 75a is pinched between the front body 14a and the first drain pan 75a. A material having heat conductivity may be used for the third heat transfer member 76. Thus, heat is transferred from the indoor heat exchanger 14 to the dew condensation water accumulated in the first drain pan 75a.

A fourth heat transfer member 77 for transferring heat from the rear body 14b to the dew condensation water accumulated in the second drain pan 75b is pinched between the front body 14a and the second drain pan 75b. The same material as that of the third heat transfer member 76 is used for the fourth heat transfer member 77. Thus, the heat is transferred from the indoor heat exchanger 14 to the dew condensation water accumulated in the second drain pan 75b.

### (3) Configuration of Control System

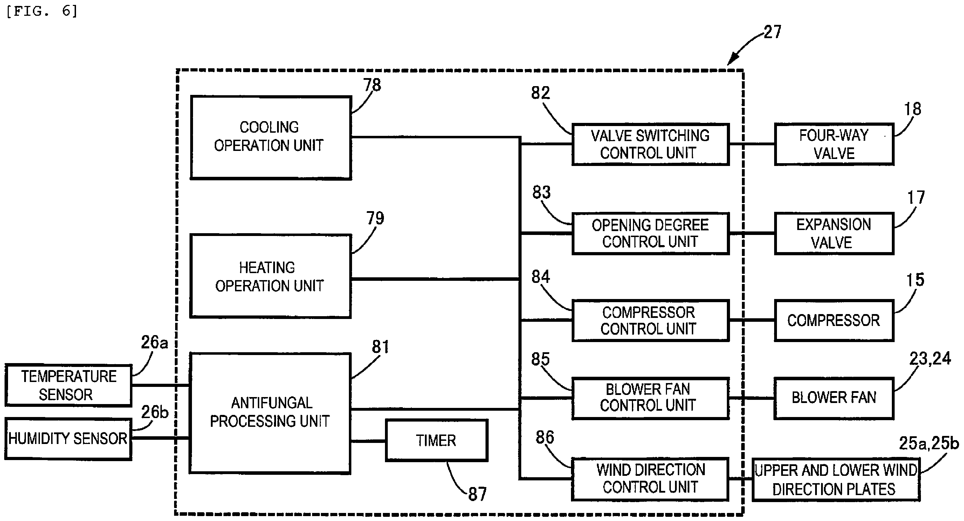

As illustrated in FIG. 6, the control unit 27 includes a cooling operation unit 78 managing a cooling operation, a heating operation unit 79 managing a heating operation, and an antifungal processing unit 81 managing an operation of an antifungal process. A valve switching control unit 82, an opening degree control unit 83, a compressor control unit 84, a blower fan control unit 85, and a wind direction control unit 86 are connected to the cooling operation unit 78, the heating operation unit 79, and the antifungal processing unit 81. The valve switching control unit 82 is connected to the four-way valve 18. The valve switching control unit 82 outputs a control signal to the four-way valve 18. The four-way valve 18 is switched between a first position and a second position in response to the received control signal. In the first position, the four-way valve 18 connects the second port 18b and the third port 18c to each other, and connects the first port 18a and the fourth port 18d to each other. In the second position, the four-way valve 18 connects the second port 18b and the fourth port 18d to each other, and connects the first port 18a and the third port 18c to each other. The valve switching control unit 82 generates a control signal for specifying the first position or the second position according to an instruction from the cooling operation unit 78, the heating operation unit 79, or the antifungal processing unit 81.

The opening degree control unit 83 is connected to the expansion valve 17. The opening degree control unit 83 outputs a control signal to the expansion valve 17. The opening degree of the expansion valve 17 is adjusted in accordance with the received control signal. The control signal specifies the opening degree of the expansion valve 17. In setting the temperature of the indoor heat exchanger 14, adjustment of the opening degree of the expansion valve 17 is used together with the control of the compressor 15 described later. The opening degree control unit 83 generates a control signal for specifying the opening degree of the expansion valve 17 in accordance with an instruction from the cooling operation unit 78, the heating operation unit 79, or the antifungal processing unit 81.

The compressor control unit 84 is connected to the compressor 15. The compressor control unit 84 outputs a control signal to the compressor 15. The operation of the compressor 15 is controlled in accordance with the received control signal. The control signal specifies, for example, the rotational speed of the compressor 15. In setting the temperature of the indoor heat exchanger 14, the operation of the compressor 15 is adjusted together with the opening degree of the expansion valve 17. The compressor control unit 84 generates a control signal specifying the rotational speed of the compressor 15 in accordance with an instruction from the cooling operation unit 78, the heating operation unit 79, or the antifungal processing unit 81.

The blower fan control unit 85 is connected to the blower fans 23 and 24. The blower fan control unit 85 outputs a control signal to the blower fans 23 and 24. The rotation of the blower fans 23 and 24 is controlled in accordance with the received control signal. The control signal switches, for example, the rotation and stop of the blower fans 23 and 24. When the blower fans 23 and 24 rotate, the control signal specifies the rotational speeds of the blower fans 23 and 24. An amount of heat energy exchanged in the indoor heat exchanger 14 or the outdoor heat exchanger 16 is adjusted according to the air volume based on the rotation of the blower fans 23 and 24. The blower fan control unit 85 generates a control signal for specifying the stop of operation or the rotational speed of the blower fans 23 and 24 according to an instruction from the cooling operation unit 78, the heating operation unit 79, or the antifungal processing unit 81.

The wind direction control unit 86 is connected to the upper and lower wind direction plates 25a and 25b. The wind direction control unit 86 outputs a control signal to the upper and lower wind direction plates 25a and 25b. The attitude of the upper and lower wind direction plates 25a and 25b around the horizontal axis lines 32a and 32b is controlled according to the received control signal. The control signal specifies, for example, the angles of the upper and lower wind direction plates 25a and 25b around the horizontal axis lines 32a and 32b. The upper and lower wind direction plates 25a and 25b close the blowing port 29 at a minimum angle. At a maximum angle, the upper and lower wind direction plates 25a and 25b open the blowing port 29 to a maximum. The wind direction control unit 86 generates a control signal for specifying the angles of the upper and lower wind direction plates 25a and 25b according to an instruction from the cooling operation unit 78, the heating operation unit 79, or the antifungal processing unit 81.

The cooling operation unit 78 instructs the valve switching control unit 82 to establish the cooling operation. The cooling operation unit 78 instructs the opening degree control unit 83 and the compressor control unit 84 to control the opening degree of the expansion valve 17 and the rotational speed of the compressor 15 according to the set temperature and the flow rate at the time of the cooling operation. The heating operation unit 79 instructs the valve switching control unit 82 to establish the heating operation. The heating operation unit 79 instructs the opening degree control unit 83 and the compressor control unit 84 to control the opening degree of the expansion valve 17 and the rotational speed of the compressor 15 according to the set temperature and the flow rate at the time of the heating operation.

The temperature sensor 26a and the humidity sensor 26b are connected to the antifungal processing unit 81. The temperature sensor 26a and the humidity sensor 26b may be used also as sensors used for the cooling operation or the heating operation of the air conditioner. The antifungal processing unit 81 estimates a water amount of the dew condensation water generated on the surface of the indoor heat exchanger 14 based on the temperature of the indoor heat exchanger 14 and the humidity in the main body 28a. Here, the antifungal processing unit 81 may estimate the water amount of the dew condensation water based on, for example, the saturated water vapor amount for each temperature detected by the temperature sensor 25a and an elapsed time of the cooling operation.

A timer 87 is connected to the antifungal processing unit 81. The timer 87 measures time according to an instruction of the antifungal processing unit 81. A duration time of the operation of the air conditioner and the elapsed time from the end of operation are measured. The timer 87 outputs a clocking signal to the antifungal processing unit 81. The clocking signal specifies a value of the clocked time. The antifungal processing unit 81 controls the operation of the valve switching control unit 82, the operation of the opening degree control unit 83, and the operation of the compressor control unit 84 according to the value of the clocked time.

### (4) Antifungal Processing Operation

Next, an antifungal processing operation performed by the air conditioner 11 will be described. The antifungal processing unit 81 of the control unit 27 operates in execution of the antifungal processing operation. The antifungal processing operation may be performed based on, for example, the temperature and humidity of the indoor heat exchanger 14 after the cooling operation. In the execution of the antifungal processing operation, a notification indicating the end of the cooling operation is supplied from the cooling operation unit 78 to the antifungal processing unit 81.

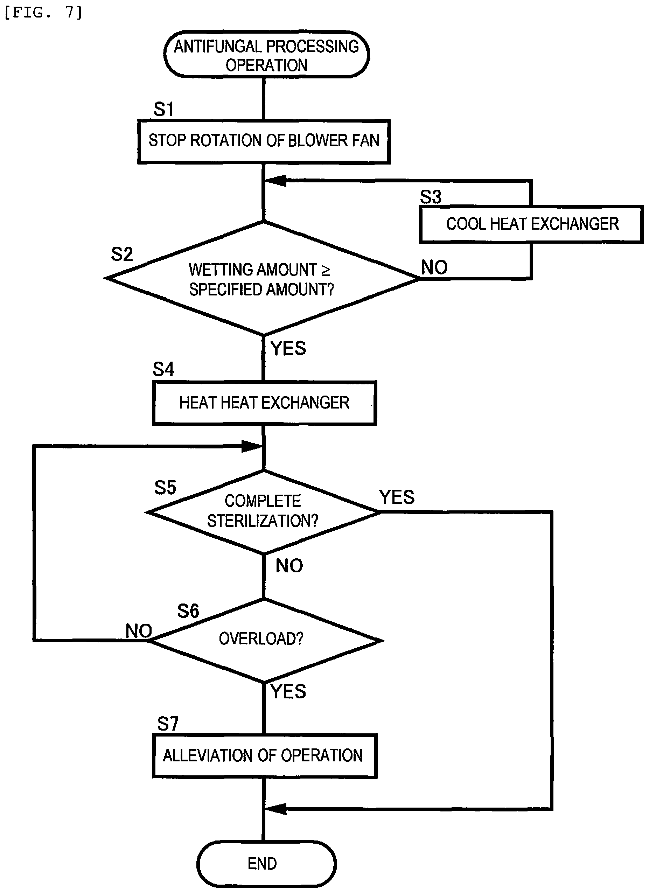

As illustrated in FIG. 7, when the antifungal processing unit 81 receives the notification of the end of the cooling operation, the rotation of the blower fan 24 is stopped in step S1. In order to realize the stop, the antifungal processing unit 81 supplies a command signal to the blower fan control unit 85. The command signal specifies the stop of the blower fan 24. The stop of the blower fan 24 suppresses evaporation of the dew condensation water from the surface of the indoor heat exchanger 14. In this case, the position of the four-way valve 18 is maintained during the cooling operation.

The command signal supplied from the antifungal processing unit 81 in step S1 may decrease the rotational speed of the fan or may intermittently rotate the fan. It may be adjusted appropriately according to the water amount of dew condensation water.

In step S2, the antifungal processing unit 81 specifies a wetting amount of the indoor heat exchanger 14 from the water amount of dew condensation water generated on the surface of the indoor heat exchanger 14. In order to specify the wetting amount, the antifungal processing unit 81 estimates the saturated water vapor amount from the temperature signal and the humidity signal. The antifungal processing unit 81 specifies the water amount of the dew condensation water from the estimated saturated water vapor amount and the value of the duration time or elapsed time clocked by the timer 87. Generally, after the cooling operation, the temperature of the indoor heat exchanger 14 is low and dew condensation water is generated on the surface of the indoor heat exchanger 14.

In a case where the estimated wetting amount falls short of a predetermined specified amount, the antifungal processing unit 81 cools the indoor heat exchanger 14 in step S3. In cooling the indoor heat exchanger 14, the antifungal processing unit 81 supplies a command signal to the opening degree control unit 83 and the compressor control unit 84. The command signal specifies, for example, the operation of the expansion valve 17 and the compressor 15 which lowers the evaporation temperature of the refrigerant in the indoor heat exchanger 14. As a result, the temperature of the indoor heat exchanger 14 is lowered, and the generation of the dew condensation water is promoted. Sufficient wetting can be ensured on the surface of the indoor heat exchanger 14. The predetermined specified amount of the wetting amount may be set to a water amount that cannot be subjected to wet-heat sterilization by evaporation while heating the indoor heat exchanger 14 to perform the wet-heat sterilization.

If the estimated wetting amount reaches the predetermined specified amount, the antifungal processing unit 81 heats the indoor heat exchanger 14 in step S4. Condensation of the refrigerant is used to heat the indoor heat exchanger 14. In this case, the antifungal processing unit 81 supplies a command signal to the valve switching control unit 82. The command signal specifies switching of the four-way valve 18. The four-way valve 18 is switched to the position at the time of the heating operation. Here, the temperature of the indoor heat exchanger 14 at the time of heating is set to 45 degrees Celsius or higher.

Thus, the indoor heat exchanger 14 is heated without evaporating the dew condensation water on the surface of the indoor heat exchanger 14 without passing through the drying operation, which is performed in the related art. The dew condensation water is heated by the indoor heat exchanger 14. The bacteria and the fungus are heated in the heated dew condensation water. Therefore, the bacteria and the fungus are wet-heat sterilized. It can kill the bacteria and the fungus, and reduce the number thereof.

In particular, when the temperature of the indoor heat exchanger 14 is set to 45 degrees Celsius or higher, the dew condensation water is heated to 45 degrees Celsius or higher, and wet-heat sterilization of the bacteria and the fungus is effectively realized. Furthermore, when the temperature of the indoor heat exchanger 14 is set to 60 degrees Celsius or higher, wet-heat sterilization of the bacteria and the fungus is realized more effectively. The time to sterilization can be shortened. However, it is desirable that the temperature of the indoor heat exchanger 14 be set to less than 70 degrees Celsius or as low as possible, in order to suppress evaporation of the dew condensation water as much as possible. In a state where the heat exchanger is dry, even if the temperature is set to 45 degrees Celsius or higher, it does not lead to sterilization of the bacteria and the fungus.

When the indoor heat exchanger 14 is heated, the opening degree of the expansion valve 17 and the rotation of the blower fans 23 and 24 are appropriately set so that the temperature of the indoor heat exchanger 14 does not exceed 60 degrees Celsius not to enter an overload condition.

In this case, heat is transferred from the indoor heat exchanger 14 to the connecting body 73, the first drain pan 75a, and the second drain pan 75b. Condensation of the refrigerant is performed until the temperatures of the connecting body 73, the first drain pan 75a, and the second drain pan 75b reach each set temperature. The temperatures of the connecting body 73, the first drain pan 75a, and the second drain pan 75b follow the temperature rise of the indoor heat exchanger 14 with delay. In the indoor heat exchanger 14, a case where the time is longer than a predetermined time and the temperature reaches a predetermined temperature or higher, it may be determined that the set temperature has been reached based on the temperature detected by the temperature sensor 26a. In order to directly measure a temperature of a portion to be heated, the connecting body 73 may be provided with a connecting body temperature sensor (not illustrated) that detects the temperature of the connecting body. Similarly, a drain pan temperature sensor (not illustrated) may be provided in the vicinity where the heating of the first drain pan 75a and the second drain pan 75b is performed. In this way, in the indoor heat exchanger 14, since the connecting body 73 is heated to a sufficient set temperature, the bacteria and the fungus are sufficiently heated in the dew condensation water generated on the surface of the connecting body 73 and the wet-heat sterilization is performed. Similarly, since the first drain pan 75a and the second drain pan 75b are heated to a sufficient set temperature, the bacteria and the fungus are sufficiently heated and wet-heat sterilized in the dew condensation water accumulated in the first drain pan 75a and the second drain pan 75b.

In step S5, the antifungal processing unit 81 determines the completion of wet-heat sterilization. For example, the antifungal processing unit 81 uses the clocking of the timer 87 for the determination. The timer 87 measures the duration time of the set temperature. When the duration time of the set temperature reaches the specified value, the antifungal processing unit 81 ends the wet-heat sterilization. If the duration time of the set temperature is less than the specified value, the antifungal processing unit 81 continues the heating operation. The specified value of the duration time of the set temperature may be equal to or longer than the time at which the effect of wet-heat sterilization can be obtained. According to the applicant's experiments, it is known that the effect of the wet-heat sterilization can be obtained by setting the time to 3 minutes or higher for Escherichia coli and 5 minutes or higher for black fungus. In addition, it has been found that 10 minutes or higher is desirable for Legionella bacteria. In this case, the antifungal processing unit 81 observes the operation of the compressor 15 in step S6. When an overload of the compressor 15 is detected upon heating to the set temperature, the antifungal processing unit 81 lowers the discharge temperature of the compressor 15 in step S7, and the heating operation is ended. If no overload is detected, the heating operation is continued until it is determined in step S5 that wet-heat sterilization is completed.

Here, the overload condition of the compressor 15 set at the time of condensation is alleviated compared with the overload condition of the compressor 15 set at the time of heating operation. That is, the discharge temperature, which is a threshold value of the overload condition, is set high, or the time is set long until an overload protection operation is set when the discharge temperature exceeds the threshold value of the overload condition for a predetermined time. Since the overload condition of the compressor 15 is alleviated during the antifungal processing operation, the indoor heat exchanger 14 can be heated to a higher temperature than that during the heating operation. The wet-heat sterilization of the bacteria and the fungus is realized.

In the antifungal processing operation of the air conditioner 11, a drying process in the main body 28a may be performed subsequent to the wet-heat sterilization process. In the drying process, the rotation of the blower fan 24 is started while the heating of the indoor heat exchanger 14 is maintained. The antifungal processing unit 81 supplies a command signal to the blower fan control unit 85 when the blower fan 24 rotates. The command signal specifies the rotational speed of the blower fan 24. The rotation of the blower fan 24 promotes the evaporation of the heated dew condensation water. In this case, the blowing port 29 may be closed by the upper and lower wind direction plates 25a and 25b. When the blowing port 29 is closed, the antifungal processing unit 81 supplies a command signal to the wind direction control unit 86. The command signal specifies the minimum angle of the upper and lower wind direction plates 25a and 25b. Thus, the blowout of the warm air after the cooling operation is avoided. In this way, the dry heating is continued following the wet-heat sterilization process, thereby suppressing the growth of the bacteria and the fungus remaining in the wet-heat sterilization.

## Claims

1. An antifungal method for an air conditioner (11), comprising:
a step of wetting a surface of a heat exchanger (14) with dew condensation water resultant from evaporation of a refrigerant; and
a step of heating the heat exchanger (14) based on condensation of the refrigerant in the heat exchanger (14),
**characterized by**
a temperature of the heat exchanger (14) being maintained in a range equal to or higher than 45 degrees Celsius and equal to or lower than 60 degrees Celsius.

2. The antifungal method for an air conditioner (11) according to claim 1,
wherein the heat exchanger (14) includes a front body (14a) disposed on a front side of a rotation shaft of a blower fan (24) included in the air conditioner (11), and a rear body (14b) disposed on a rear side of the rotation shaft of the blower fan (24), and when the heat exchanger (14) is heated, heat is transferred from the heat exchanger (14) to a connecting body (73) connecting the front body (14a) and the rear body (14b) of the heat exchanger (14) to each other, and the condensation is performed until the connecting body (73) reaches a set temperature.

3. The antifungal method for an air conditioner (11) according to claim 1 or 2,
wherein when the heat exchanger (14) is heated, heat is transferred from the heat exchanger (14) to the dew condensation water accumulated in a drain pan (75a) receiving the dew condensation water falling from the heat exchanger (14), and the condensation is performed until the dew condensation water accumulated in the drain pan (75a) reaches a set temperature.

4. The antifungal method for an air conditioner (11) according to any one of claims 1 to 3,
wherein an overload condition of the compressor (15) set at a time of condensation is alleviated compared to an overload condition of the compressor (15) set at a time of a heating operation.

5. The antifungal method for an air conditioner (11) according to any one of claims 1 to 4,
wherein a rotation of the blower fan (24) is stopped when the heat exchanger (14) is heated.

## Patentansprüche

1. Antimykotisches Verfahren für eine Klimaanlage (11), umfassend:
einen Schritt des Benetzens einer Oberfläche eines Wärmetauschers (14) mit Taukondenswasser, das aus der Verdampfung eines Kältemittels resultiert, und
einen Schritt des Erhitzens des Wärmetauschers (14) basierend auf der Kondensation des Kältemittels in dem Wärmetauscher (14),
**gekennzeichnet durch**
eine Temperatur des Wärmetauschers (14), die in einem Bereich von 45 Grad Celsius oder höher und 60 Grad Celsius oder niedriger gehalten wird.

2. Antimykotisches Verfahren für eine Klimaanlage (11) nach Anspruch 1,
wobei der Wärmetauscher (14) einen vorderen Körper (14a), der auf einer Vorderseite einer Drehwelle eines in der Klimaanlage (11) enthaltenen Gebläses (24) angeordnet ist, und einen hinteren Körper (14b), der auf einer Rückseite der Rotationswelle des Gebläses (24) angeordnet ist, umfasst, und wenn der Wärmetauscher (14) erhitzt wird, Wärme vom Wärmetauscher (14) auf einen Verbindungskörper (73) übertragen wird, der den vorderen Körper (14a) und den hinteren Körper (14b) des Wärmetauschers miteinander verbindet, und die Kondensation durchgeführt wird, bis der Verbindungskörper (73) eine Solltemperatur erreicht.

3. Antimykotisches Verfahren für eine Klimaanlage (11) nach Anspruch 1 oder 2,
wobei beim Erhitzen des Wärmetauschers (14) Wärme vom Wärmetauscher (14) auf das Taukondenswasser übertragen wird, das sich in einer Auffangwanne (75a) ansammelt, die das aus dem Wärmetauscher (14) fallende Taukondenswasser aufnimmt, und die Kondensation durchgeführt wird, bis das in der Auffangwanne (75a) angesammelte Taukondenswasser eine Solltemperatur erreicht.

4. Antimykotisches Verfahren für eine Klimaanlage (11) nach einem der Ansprüche 1 bis 3,
wobei ein zum Zeitpunkt der Kondensation festgelegter Überlastungszustand des Kompressors (15) im Vergleich zu einem zum Zeitpunkt eines Heizbetriebs festgelegten Überlastungszustand des Kompressors (15) abgemindert wird.

5. Antimykotisches Verfahren für eine Klimaanlage (11) nach einem der Ansprüche 1 bis 4,
wobei eine Drehung des Gebläses (24) angehalten wird, wenn der Wärmetauscher (14) erhitzt wird.

## Revendications

1. Procédé antifongique pour un climatiseur (11), comprenant :
une étape de mouillage d'une surface d'un échangeur de chaleur (14) avec de l'eau de condensation de rosée résultant de l'évaporation d'un frigorigène; et
une étape de chauffage de l'échangeur de chaleur (14) sur la base de la condensation du frigorigène dans l'échangeur de chaleur (14),
**caractérisé par**
une température de l'échangeur de chaleur (14) qui est maintenue dans une plage égale ou supérieure à 45 degrés Celsius et égale ou inférieure à 60 degrés Celsius.

2. Procédé antifongique pour un climatiseur (11) selon la revendication 1,
dans lequel l'échangeur de chaleur (14) comprend un corps avant (14a) disposé sur un côté avant d'un arbre de rotation d'un ventilateur soufflant (24) inclus dans le climatiseur (11), et un corps arrière (14b) disposé sur un côté arrière de l'arbre de rotation du ventilateur soufflant (24), et quand l'échangeur de chaleur (14) est chauffé, de la chaleur est transférée de l'échangeur de chaleur (14) à un corps de connexion (73) connectant le corps avant (14a) et le corps arrière (14b) de l'échangeur de chaleur (14) l'un à l'autre, et la condensation est effectuée jusqu'à ce que le corps de connexion (73) atteigne une température de consigne.

3. Procédé antifongique pour un climatiseur (11) selon la revendication 1 ou 2,
dans lequel lorsque l'échangeur de chaleur (14) est chauffé, de la chaleur est transférée de l'échangeur de chaleur (14) à l'eau de condensation de rosée accumulée dans un bac de récupération (75a) recevant l'eau de condensation de rosée tombant de l'échangeur de chaleur (14), et la condensation est effectuée jusqu'à ce que l'eau de condensation de rosée accumulée dans le bac de récupération (75a) atteigne une température de consigne.

4. Procédé antifongique pour un climatiseur (11) selon l'une quelconque des revendications 1 à 3,
dans lequel une condition de surcharge du compresseur (15) établie à un certain moment de la condensation est allégée en comparaison avec une condition de surcharge du compresseur (15) établie à un certain moment de l'opération de chauffage.

5. Procédé antifongique pour un climatiseur (11) selon l'une quelconque des revendications 1 à 4,
dans lequel la rotation du ventilateur soufflant (24) est stoppée lorsque l'échangeur de chaleur (14) est chauffé.
